# EUROPÄISCHE PATENTSCHRIFT

(11) **EP 2 402 224 B1**
(45) Veröffentlichungstag und Bekanntmachung des Hinweises auf die Patenterteilung: **29.07.2015**
(21) Anmeldenummer: 10168030.4
(22) Anmeldetag: 30.06.2010
(51) Int. Cl.: B60T 13/46, C08L 77/06, C08L 77/02, B60T 17/04, F16L 9/12, C08L 9/02, C08L 23/16, C08L 23/18, C08L 23/20

(54) **Bremskraftverstärker-Leitung**
Brake booster pipe
Conduit de servofrein

(43) Veröffentlichungstag der Anmeldung: 04.01.2012
(73) Patentinhaber: EMS-PATENT AG, 7013 Domat / Ems (CH)
(72) Erfinder: Hoffmann, Botho, 7013 Domat/Ems (CH); Scherrer, Luc, 7015 Tamins (CH); Kettl, Ralph, 7417 Paspels (CH)
(74) Vertreter: OK pat AG

(56) Entgegenhaltungen:
- US-A1- 2004 096 615
- US-A1- 2008 057 246
- US-A1- 2009 065 085
- US-A1- 2009 269 532

## Beschreibung

Die Erfindung betrifft gemäss dem Oberbegriff des unabhängigen Anspruchs 1 eine Unterdruck-Bremskraftverstärker-Leitung, die hergestellt ist aus einer Polyamid-Blend-Formmasse mit einem Polyamid-Blend-Anteil und einer Schlagzähkomponente. Derartige Formmassen sind unter anderem zur Herstellung von Leitungen in Industrie- und Automobilanwendungen, bevorzugt für Vakuumleitungen und besonders bevorzugt für Unterdruck-Bremskraftverstärker-Leitungen geeignet.

Kunststoffrohre aus Polyamid sind bekannt und werden sehr vielseitig im Fahrzeugbau zum Beispiel für Brems-, Hydraulik-, Kraftstoff-, Kühl-, und Pneumatikleitungen eingesetzt (vgl. DIN 73378: "Rohre aus Polyamid für Kraftfahrzeuge"). Polyamid-Blend-Formmassen mit einem Polyamid-Blend-Anteil und einer Schlagzähkomponente sind aus der Patentanmeldung EP 1 942 296 A1 in Bezug auf die Herstellung von Hydraulikleitungen, insbesondere Kupplungs-Leitungen, bekannt.

Im Kraftfahrzeugbau eingesetzte Kunststoffrohre oder -leitungen müssen eine Vielzahl von Anforderungen erfüllen. Für den Fall einer Bremskraftverstärker-Leitung kann deren Funktionsweise folgendermassen beschrieben werden:
Zur Verringerung der zum Erreichen einer gewünschten Bremswirkung notwendigen Betätigungskraft, wird an der Bremse eines Fahrzeugs ein Bremskraftverstärker eingesetzt. Dies ist insbesondere dann notwendig, wenn Scheibenbremsen verwendet werden, weil die Betätigung der Scheibenbremsen eines Automobils mit dem Pedaldruck allein einen zu hohen Kraftaufwand erfordern würde. Bei den in Personenkraftwagen und leichten Nutzfahrzeugen vorwiegend verbauten Unterdruck-Bremskraftverstärkern wird die Hilfskraft mittels einer Druckdifferenz (Atmosphärendruck zu Unterdruck) erzeugt. Bei mittleren bis schweren Nutzfahrzeugen (in der Regel ab 7.49 t) wie z.B. Lastkraftwagen wird die Bremskraft mittels Druckluft, d.h. mittels einer Fremdkraftbremsanlage erzeugt; der Betriebsdruck liegt hier bei ca. 8 bar. Neben diesen pneumatischen sind auch hydraulische oder elektrische Bremskraftverstärker bekannt.

Kraftfahrzeuge mit klassischen Ottomotoren erfordern bei Teillast den Einsatz einer Drosselklappe, um ein brennfähiges Kraftstoff-Luftgemisch zu erzeugen. Als Nebeneffekt entsteht hinter der Drosselklappe im Ansaugtrakt (Ansaugkrümmer) ein Unterdruck. Bei pneumatischen Bremskraftverstärkern wird mit Hilfe des Ansaug-Unterdrucks oder einer Vakuumpumpe der Bremspedaldruck verstärkt. Bei aktuellen Ottomotoren mit Benzindirekteinspritzung, wie z.B. beim VW TSI, wird durch den systembedingten Entfall der Drosselklappe eine separate Saugpumpe bzw. Unterdruckpumpe (auch Vakuumpumpe) erforderlich, wie dies bei Dieselmotoren (die prinzipiell über keine Drosselklappe verfügen) auch der Fall ist. In der Verbindungsleitung zwischen Bremskraftverstärker und Unterdruckquelle ist ein Rückschlagventil eingebaut, das dazu dient, den Unterdruck bei Volllast und stehendem Motor aufrecht zu erhalten. Dieser Unterdruck stellt ein Druckgefälle gegenüber der Aussenluft dar, das sich im Bremskraftverstärker zur Erhöhung der Bremskraft ausnutzen lässt.

Das Vakuum bzw. der Unterdruck wird üblicherweise mittels Rohrleitungen vom Vakuumerzeuger zu den Bremsen bzw. zum Bremskraftverstärker (BKV) gebracht. Damit diese eine einwandfreie Funktion des Bremskraftverstärkers bei allen möglichen Wetter- und Temperaturbedingungen gewährleistet, müssen von einer Bremskraftverstärker-Leitung unter anderem folgende Anforderungen erfüllt werden:
1) Werkstoffanforderungen an flexible Leitungen "TL 52655", Bremskraftverstärker-Leitungen (VOLKSWAGEN AG): Normaltemperaturbereich (Dauertemperatur T_{D} ≤ 120 °C); Hochtemperaturbereich (Dauertemperatur T_{D} ≤ 160 °C), genügende Festigkeit bis mindestens +150 °C (kurzfristig bis über +160 °C). Andererseits müssen Bremskraftverstärker-Leitungen auch bei Temperaturen von -40 °C sicher funktionieren. Zudem wird verlangt, dass solche Bremskraftverstärker-Leitungen beständig gegen Ozon sind und einen wiederholten Klimawechsel (mit bis zu 20-60 Zyklen) ohne Rissbildung überstehen.
2) Worldwide Engineering Standards for Low Pressure Pipe Assembly for Brake Boosters "GMW14640" (GENERAL MOTORS): Typ A Normaltemperaturbereich -40 °C bis +110 °C (Spitzentemperatur bis +120 °C); Typ B Hochtemperaturbereich -40 °C bis +140 °C (Spitzentemperatur bis +150 °C). Dies gilt für die Leitungsdurchmesser 9 ± 0.15 x 1.5 ± 0.1 mm; 12 ± 0.15 x 1.5 ± 0.1 mm und 12.5 ± 0.15 x 1.25 ± 0.1 mm.
3) Liefervorschrift für Rohre aus Polyamid (PA) für den Niederdruckbereich "DBL 6270" (MERCEDES-BENZ): Die Rohre werden einer Wärmealterung über 1000 Stunden bei Lagertemperaturen von bis zu +150 °C unterzogen und dann nach ISO 179 bei 23 °C und -40 °C auf Schlagzähigkeit geprüft. Im Neuzustand der Rohre erfolgt eine Schlagzähigkeitsprüfung bei 23 °C; -40 °C und -50 °C. Die Berstdruckprüfung erfolgt nach DIN 53 758. Für Bremskraftverstärker-Leitungen erfolgt eine Kennzeichnung nach DIN 73 378 sowie nach FMVSS106/74. Für Rohre im Bereich Druckluftbremsanlagen gelten zusätzlich die DIN 74 324-1 und die DIN 74 324-2. Für Rohre als Unterdruckleitung zum Betrieb von Bremskraftverstärkern gilt (ausser für Unimog) ergänzend die Produktspezifikation A116 000 66 99 und die Norm FMVSS 106.

Aus dem Stand der Technik sind ausserdem die Dokumente EP 1 329 481 A2 und DE 103 33 005 A1 bekannt. Beide befassen sich mit Leitungen für den Kraftfahrzeugbau, den Maschinen- und Apparatebau und die Medizintechnik. Im Speziellen befassen sich diese Dokumente mit der Herstellung von Unterdruckleitungen für Bremskraftverstärker, mit Lüftungsleitungen, Druckschläuchen, Druckluftleitungen, Steuerleitungen, Kühlmittelleitungen, Kraftstoffleitungen, Entlüftungsleitungen, Scheibenwaschanlageleitungen, Leitungen für hydraulische Kupplungssysteme, Servolenkungsleitungen, Klimaanlageleitungen, Kabel- oder Ader-Ummantelungen bzw. mit spritzgegossenen Teilen eines Ölfilters oder eines Kraftstofffilters. Dabei offenbart EP 1 329 481 A2 eine Formmasse, die 99.9 bis 95 Gew.-Teile eines Polyetheramids auf Basis eines linearen aliphatischen Diamins mit 6 bis 12 C-Atomen, einer linearen aliphatischen oder aromatischen Dicarbonsäure mit 6 bis 12 C-Atomen und eines Polyetherdiamins mit wenigstens 3 C-Atomen pro Ethersauerstoff und primären Aminogruppen an den Kettenenden enthält. Zu 100 Gew.-Teilen ergänzt wird diese Formmasse mit 0.1 bis 5 Gew.-Teilen eines Co-Polymeren aus unterschiedlichen chemischen Bausteinen.

DE 103 33 005 A1 offenbart eine Formmasse, die 97 bis 80 Gew.-Teile eines Polyetheramids auf Basis eines linearen aliphatischen Diamins mit 6 bis 14 C-Atomen, einer linearen aliphatischen oder aromatischen Dicarbonsäure mit 6 bis 14 C-Atomen und eines Polyetherdiamins mit wenigstens 3 C-Atomen pro Ethersauerstoff und primären Aminogruppen an den Kettenenden enthält. Zu 100 Gew.-Teilen ergänzt wird diese Formmasse mit 3 bis 20 Gew.-Teilen eines funktionelle Gruppen enthaltenden Kautschuks.

Aus dem Stand der Technik ist zudem das Produkt VESTAMID^{®} EX9350 schwarz bekannt (VESTAMID^{®} ist eine eingetragene Marke der EVONIK DEGUSSA GmbH). Dabei handelt es sich um ein hitze- und witterungsbeständiges, schlagzähmodifiziertes Polyamid 612-Elastomer für die Extrusionsverarbeitung z.B. bei der Herstellung von Rohrleitungen, wie etwa Bremskraftverstärker-Leitungen.

Aus M. Xanthos et al. 1996 "Impact Modification of Aromatic/Aliphatic Polyamide Blends: Effects of Composition and Processing Conditions" (Journal of Applied Polymer Science, Vol. 62: 1167-1177) sind Blends von aromatischen/aliphatischen Polyamiden mit unterschiedlicher Zusammensetzung bekannt. Offenbart wird eine Polyamid-Blend-Formmasse mit einem Polyamid-Anteil und mindestens einer Schlagzähkomponente, wobei diese Polyamid-Blend-Formmasse folgende Komponenten umfasst:
- 32 Gew.-% eines amorphen Polyamids (PA 6I/6T) mit durchschnittlich 7 C-Atomen pro Monomereinheit;
- 48 Gew.-% eines Polyamids (Nylon 6) auf Lactam- und/oder Aminocarbonsäure-Basis und mit durchschnittlich 6 C-Atomen pro Monomereinheit; und
- 20 Gew.-% eines mit Maleinsäureanhydrid funktionalisierten Ethylen/Propylen-Elastomers (EPX).

Aus dem Dokument US 5,928,738 ist eine Polyamid-Blend-Formmasse mit einem Polyamid-Blend-Anteil und mindestens einer Schlagzähkomponente bekannt, wobei die Polyamid-Blend-Formmasse folgende Komponenten umfasst:
- 30 Gew.-% eines Polyamids 6/12 (Grilon CF6S) mit durchschnittlich 9 C-Atomen pro Monomereinheit;
- 10 Gew.-% eines amorphen Polyamids 6I/6T;
- 50 Gew.-% eines Polyamids 6 auf Lactam- und/oder Aminocarbonsäure-Basis und mit durchschnittlich 6 C-Atomen pro Monomereinheit; und
- 10 Gew.-% Ethylen/Methacrylsäure-Elastomers.

Aus dem Dokument US 6,416,832 ist eine Polyamid-Blend-Formmasse mit einem Polyamid-Blend-Anteil und mindestens einer Schlagzähkomponente bekannt, wobei die Polyamid-Blend-Formmasse folgende Komponenten umfasst:
- 20 Gew.-% eines Polyamids 6/12/MXD6 mit durchschnittlich 8 C-Atomen pro Monomereinheit;
- 10 Gew.-% eines amorphen Polyamids;
- 50 Gew.-% eines Polyamids 6 auf Lactam- und/oder Aminocarbonsäure-Basis und mit durchschnittlich 6 C-Atomen pro Monomereinheit; und
- 20 Gew.-% Elastomere auf Polyethylen-Basis (AAE und PE).

Aus dem Dokument US 2005/0009976 A1 ist eine Polyamid-Blend-Formmasse mit einem Polyamid-Blend-Anteil und mindestens einer Schlagzähkomponente bekannt, wobei die Polyamid-Blend-Formmasse folgende Komponenten umfasst:
- 45 Gew.-% eines Polyamids MXD6 mit durchschnittlich 7 C-Atomen pro Monomereinheit;
- 25 Gew.-% eines amorphen Polyamids; und
- 30 Gew.-% eines Polyamids (PA6-NC2) auf Lactam- und/oder Aminocarbonsäure-Basis und mit durchschnittlich 6 C-Atomen pro Monomereinheit.

Aus dem Dokument US 2007/0089798 A1 ist eine Polyamid-Blend-Formmasse mit einem Polyamid-Anteil und mindestens einer Schlagzähkomponente bekannt, wobei die Polyamid-Blend-Formmasse folgende Komponenten umfasst:
- 50 Gew.-% eines Polyamids Polymetaxylylenadipamid (MXD6) mit durchschnittlich 7 C-Atomen pro Monomereinheit; und
- 50 Gew.-% eines denaturierten Polyamids 6 mit durchschnittlich 6 C-Atomen pro Monomereinheit mit einem Elastizitätsmodul von 830 MPa.

Aus dem Dokument US 2004/0259996 A1 ist das Herstellen einer Polyamid-Blend-Formmasse mit einem Polyamid-Anteil und mindestens einer Schlagzähkomponente bekannt, wobei die Polyamid-Blend-Formmasse Polyamide und Polyesteramide, nanoskalige und faserige Füllstoffe sowie Schlagzähmodifikatoren umfasst. Als Schlagzähmodifikatoren sind Ethylen-Propylen-Gummis (EPM) und Ethylen-Propylen-Dien-Gummis (EPDM) offenbart.

Aus dem Dokument JP 2001-329165 A ist eine verstärkte Polyamidzusammensetzung mit exzellenter Fliessfähigkeit beim Spritzgiessen mit kurzer Zykluszeit bekannt. Die verstärkte Polyamidzusammensetzung führt zu starken warmgeklebten bzw. quellverschweissten Produkten und umfasst 96-99.9 Gew.-% eines kristallinen Polyamids, 0.1-4 Gew.-% eines teilamorphen Copolyamids mit zumindest zwei aromatischen Monomerkomponenten, und 5-200 Gewichtsteile eines anorganischen Füllers pro 100 Gewichtsteilen des Polyamidharzes.

Aus dem Dokument EP 1 942 296 A1 ist eine Formmasse auf der Basis von Polyamid bekannt, welche auf einer Mischung aus folgenden Bestandteilen aufgebaut ist:
- 45-97 Gew.-% eines Polyamids 610 mit durchschnittlich 8 C-Atomen pro Monomereinheit;
- 0-30 Gew.-% eines amorphen und/oder mikrokristallinen Polyamids und/oder Copolyamids;
- 2-20 Gew.-% einer Schlagzähkomponente in Form eines Copolymers auf Basis von Ethylen und/oder Propylen; und
- 1-10 Gew.-% an Additiven.

Im Dokument US 2004/0096615 A1 ist im zweiten Teil des Absatzes [0113] offenbart, dass auch ein Blend aus Polyamid 6, Polyamid 12 und einem Schlagzähmodifikator, z.B. gemäss Formmasse 5 in Tabelle 1, als Schlauchmaterial gut geeignet ist. Gemäss Absatz [0002] geht es in diesem Dokument um die Verwendung als Druckluft-Bremsleitung.

Eine Aufgabe der vorliegenden Erfindung liegt darin, eine alternative Bremskraftverstärker-Leitung vorzuschlagen, die hergestellt ist aus einer Polyamid-Blend-Formmasse mit einem Polyamid-Blend-Anteil und einer Schlagzähkomponente, wobei diese alternative Bremskraftverstärker-Leitung zumindest vergleichbare Kenn-Werte wie die aus dem Stand der Technik bekannten Bremskraftverstärker-Leitungen aufweisen soll.

Diese Aufgabe wird gemäss der vorliegenden Erfindung mit einer Unterdruck-Bremskraftverstärker-Leitung gemäss dem Anspruch 1 gelöst. Diese erfindungsgemässe Unterdruck-Bremskraftverstärker-Leitung ist hergestellt aus einer Polyamid-Blend-Formmasse mit einem Polyamid-Blend-Anteil und einer Schlagzähkomponente, wobei die verwendete Polyamid-Blend-Formmasse dadurch gekennzeichnet ist, dass der Polyamid-Blend-Anteil folgende Polyamide umfasst:
(A) 25 bis 65 Gew.-% zumindest eines teilkristallinen Polyamids mit einer Schmelz-Enthalpie von > 40 J/g und mit durchschnittlich mindestens 8 C-Atomen pro Monomereinheit, ausgewählt aus einer Gruppe, welche aus den Polyamiden PA 11, PA 610, PA 612, PA 1010, PA 106, PA 106/10T, PA 614 und PA 618 besteht;
(B) 0 bis 25 Gew.-% zumindest eines amorphen und/oder mikrokristallinen Polyamids, wobei das mikrokristalline Polyamid eine Schmelz-Enthalpie im Bereich von 4 bis 40 J/g aufweist; und
(C) 1 bis 55 Gew.-% zumindest eines Polyamids mit durchschnittlich maximal 6 C-Atomen pro Monomereinheit, und bevorzugt mit einer Schmelz-Enthalpie > 40 J/g.
   Diese Polyamid-Blend-Formmasse zum Herstellen der erfindungsgemässen Unterdruck-Bremskraftverstärker-Leitung ist des Weiteren dadurch gekennzeichnet, dass die Schlagzähkomponente gebildet ist aus:
(D) 5 bis 35 Gew.-% eines Nichtpolyamid-Elastomers oder einer Mischung aus Nichtpolyamid-Elastomeren.

Alle Angaben in Gew.-% beziehen sich auf das Gesamtgewicht der Polyamid-Blend-Formmasse und ergeben sich, optional ergänzt durch ebenfalls zugegebene handelsübliche Additive, zu 100 Gew.-%.

Zudem ist die erfindungsgemässe Unterdruck-Bremskraftverstärker-Leitung als einschichtig extrudiertes Rohr ausgebildet und weist bei einer Temperatur von +180°C einen Elastizitätsmodul von mindestens 50 MPa auf, gemessen als Zug-E-Modul gemäss ISO 527 mit einer Zuggeschwindigkeit von 1 mm/min an einem ISO-Zugstab entsprechend der Norm ISO/CD 3167 Typ A1 mit den Abmessungen 170x20/10x4mm.

Die durchschnittliche Anzahl C-Atome pro Monomereinheit berechnet sich für die Polyamide aus der Summe der Anzahl C-Atome in den verwendeten Monomeren geteilt durch die Anzahl der verwendeten Monomere.

Weitere erfindungsgemässe Merkmale und bevorzugte Ausführungsformen ergeben sich aus den abhängigen Ansprüchen.

Im Zusammenhang mit der vorliegenden Erfindung werden folgende Definitionen angeführt:
Unter dem Begriff "Polyamid" werden verstanden:
   - Homopolyamide; und
   - Copolyamide.

Unter dem Begriff "Polyamidblends" werden verstanden:
- Mischungen (Blends) aus Homopolyamiden und Copolyamiden;
- Mischungen aus Homopolyamiden; und
- Mischungen aus Copolyamiden.

Unter dem Begriff "Polyamidformmasse" wird eine Formmasse verstanden, die Polyamide und/oder Polyamidblends enthält, wobei diese Polyamidformmasse Zusatzstoffe enthalten kann.

Mit dem Begriff "Struktureinheit" wird die kleinste sich in der Kette wiederholende Einheit eines Polyamids bezeichnet, die sich aus der Aminocarbonsäure und/oder dem Diamin und der Dicarbonsäure zusammensetzt. Eine zu "Struktureinheit" synonyme Bezeichnung ist der Begriff "Wiederholungseinheit". Ausgewählte Beispiele solcher Struktureinheiten sind in der Tabelle 1 dargestellt:

**Tabelle 1**

| | |
|---|---|
| PA 6 | 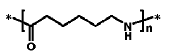 |
| PA 66 | 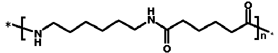 |
| PA 11 | 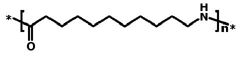 |
| PA 612 | 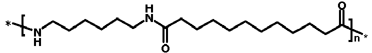 |
| PA 612/1012 | 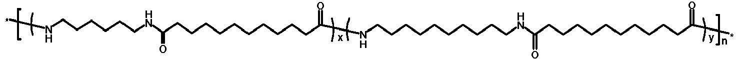 |

In der Tabelle 1 ist für jedes dieser Polyamide die Struktureinheit in eckige Klammern gesetzt und mit dem Index n versehen. Wie ersichtlich ist, umfasst die Struktureinheit eines Polyamids vom sogenannten AA/BB-Typ (z.B. PA 66 oder PA 612) mehr als eine Monomereinheit, nämlich jeweils sich ergänzende Diamin- und Dicarbonsäure-Monomereinheiten.

Unter dem Begriff "durchschnittliche (∅) Anzahl C-Atome pro Monomereinheit" wird die Anzahl C-Atome verstanden, welche sich aus der Summe der Anzahl C-Atome in den verwendeten Monomeren geteilt durch die Anzahl der verwendeten Monomere berechnet; wie zum Beispiel:

| | | |
|---|---|---|
| PA 6 | ∅ 6 C-Atome pro Monomereinheit | [6:1=6] |
| PA 66 | ∅ 6 C-Atome pro Monomereinheit | [(6+6):2=6] |
| PA 11 | ∅ 11 C-Atome pro Monomereinheit | [11:1=11] |
| PA 612 | ∅ 9 C-Atome pro Monomereinheit | [(6+12):2=9] |
| PA 612/1012 | ∅ 10 C-Atome pro Monomereinheit | [((6+12)+(10+12)):4=10]. |

Die durchschnittliche (∅) Anzahl C-Atome pro Monomereinheit kann auch eine nicht ganze Zahl sein.

Es wird des Weiteren definiert, dass Polyamide aufgebaut sind auf Basis linearer und/oder verzweigter aliphatischer und/oder cycloaliphatischer Monomere, ausgewählt aus der Gruppe Diamine, Dicarbonsäuren, Lactame und Aminocarbonsäuren. Diamine, Dicarbonsäuren, Lactame und Aminocarbonsäuren sind die vier möglichen Monomer-Typen, die sich als entsprechende Monomereinheiten in den daraus aufgebauten Polyamiden wiederfinden. Dabei wird hier unterschieden zwischen:
- Polyamiden mit durchschnittlich mindestens 8 C-Atomen pro Monomereinheit, wie z. B. PA 11, PA 12, PA 412, PA 414, PA 418, PA 46/418, PA 610, PA 612, PA 614, PA 618, PA 106 und PA 106/10T;
- amorphen und/oder mikrokristallinen Polyamiden; wobei das mikrokristalline Polyamid eine Schmelz-Enthalpie im Bereich von 4 bis 40 J/g, insbesondere im Bereich von 4 bis 25 J/g aufweist; wie z.B. PA MACMI/MACMT/12, PA MACMI/12 und PA PACM12; und
- Polyamiden mit durchschnittlich maximal 6 C-Atomen pro Monomereinheit, wie z.B. PA 6, PA 46 und PA 66.

Die Monomeren zur Herstellung der Polyamide können wie folgt ausgewählt sein:
**Dicarbonsäuren** können ausgewählt sein aus der folgenden Gruppe: Aliphatische C₄-C₄₄-Disäure, cycloaliphatische C₈-C₃₆-Disäure, aromatische Disäure (bevorzugt TPS, IPS, NDS), sowie Mischungen und Kombinationen davon. Bevorzugte Dicarbonsäuren sind ausgewählt aus der Gruppe Adipinsäure, Sebazinsäure, Dodecandisäure, Terephthalsäure, Isophthalsäure, Cyclohexandicarbonsäure und Mischungen davon, besonders bevorzugt Bernsteinsäure, Glutarsäure, Adipinsäure, Pimelinsäure, Korksäure, Azelainsäure, Sebazinsäure, Undecandisäure, Dodecandisäure, Brassylsäure, Tetradecandisäure, Pentadecandisäure, Hexadecandisäure, Heptadecandisäure, Octadecandisäure, Nonadecandisäure, Eicosandisäure, Japansäure, Cyclohexandicarbonsäure, insbesondere cis- und/ oder trans-Cyclohexan-1,4-dicarbonsäure und/oder cis- und/oder trans-Cyclohexan-1,3-dicarbonsäure (CHDA), Dimerfettsäure mit 36 oder 44 C-Atomen, Isophthalsäure, Terephthalsäure, Naphthalindicarbonsäure.
**Diamine** werden bevorzugt ausgewählt aus der Gruppe der verzweigten oder unverzweigten aliphatischen C₄-C₁₈-Diamine, cycloaliphatischen C₆-C₂₀-Diamine, Diamine mit aromatischem Kern sowie Mischungen und Kombinationen davon. Beispiele für lineare oder verzweigte, aliphatische Diamine sind 1,4-Butandiamin, 1,5-Pentandiamin, 2-Methyl-1,5-pentandiamin (MPMD), 1,6-Hexandiamin, 1,7-Heptandiamin, 1,8-Octandiamin (OMDA), 1,9-Nonandiamin (NMDA), 1,10-Decandiamin, 2-Methyl-1,8-octandiamin (MODA), 2,2,4-Trimethylhexamethylendiamin (NDT), 2,4,4-Trimethylhexamethylendiamin (INDT), 5-Methyl-1,9-nonandiamin, 1,11-Undecandiamin, 2-Butyl-2-ethyl-1,5-pentandiamin, 1,12-Dodecandiamin, 1,13-Tridecandiamin, 1,14-Tetradecandiamin, 1,16-Hexadecandiamin, Trimethylhexamethylendiamin-Terephthalat (TMDT), Isophorondiamin (IPD) und 1,18-Octadecandiamin.
Als **cycloaliphatische Diamine** können beispielsweise Cyclohexandiamin, 1,3-Bis-(aminomethyl)-cyclohexan (BAC), Isophorondiamin, Norbonandiamin, Norbonandimethylamin, Bis(aminomethyl)norbonan, 4,4'-Diaminodicyclohexylmethan (PACM), 2,2-(4,4'-Diaminodicyclohexyl)propan (PACP) und 3,3'-Dimethyl-4,4'-diamino-dicyclohexylmethan (MACM) verwendet werden. Als arylaliphatische Diamine seien m-Xylylendiamin (MXDA) und p-Xylylendiamin (PXDA) erwähnt. Alle verwendeten Kurzbezeichnungen bzw. Abkürzungen entsprechen der ISO Norm 1874-1 (vgl. Tabelle A.3: Symbole für nichtlineare aliphatische Monomereinheiten).
**Lactame** respektive **Aminocarbonsäuren** sind bevorzugt ausgewählt aus der Gruppe, die aus Caprolactam, Laurinlactam, Aminocapronsäure, Aminolaurinsäure und Aminoundecansäure besteht. Bevorzugt sind Lactame bzw. α,ω-Aminosäuren mit 4, 6, 7, 8, 11 oder 12 C-Atomen. Dies sind die Lactame Pyrrolidin-2-on (4 C-Atome), ε-caprolactam (6 C-Atome), Önanthlactam (7 C-Atome), Capryllactam (8 C-Atome), Laurinlactam (12 C-Atome) bzw. die α,ω-Aminosäuren 1,4-Aminobutansäure (4 C-Atome), 1,6-Aminohexansäure (6 C-Atome), 1,7-Aminoheptansäure (7 C-Atome), 1,8-Aminooctansäure (8 C-Atome), 1,11-Aminoundecansäure (11 C-Atome) und 1,12-Aminododecansäure (12 C-Atome).

Dem Fachmann ist bekannt, welche Monomer-Typen bzw. was für Monomere für die Herstellung der verschiedenen Polyamid-Typen (Homopolyamide vom Typ AA/BB oder vom Typ AB, bzw. für Copolyamide) einzusetzen sind.

Die vorliegende Erfindung wird vom bekannten Stand der Technik nicht nahegelegt, weil keines der oben zitierten Dokumente Unterdruck-Bremskraftverstärker-Leitungen vorschlägt, die aus einer Polyamid-Blend-Formmasse mit einem Polyamid-Blend-Anteil und einer Schlagzähkomponente gemäss der vorliegenden Erfindung hergestellt sind.

Die vorliegende Erfindung wird an Hand der beiliegenden Figuren, welche die Erfindung an Hand von Beispielen lediglich illustrieren aber nicht beschränken sollen, näher erläutert. Dabei zeigt:
- Fig. 1: eine logarithmische Darstellung des E-Moduls an mit erfindungsgemässen Formmassen und mit Vergleichsformmassen hergestellten Formkörpern bei unterschiedlichen Temperaturen gemessen;
- Fig. 2: eine Darstellung des relativen E-Moduls in Abhängigkeit der Zeit an mit erfindungsgemässen Formmassen und mit Vergleichsformmassen hergestellten Formkörpern bei +150 °C gemessen;
- Fig. 3: eine Darstellung des Gewichtsverlustes in Abhängigkeit der Zeit an mit erfindungsgemässen Formmassen und mit Vergleichsformmassen hergestellten Formkörpern bei +150 °C gemessen.

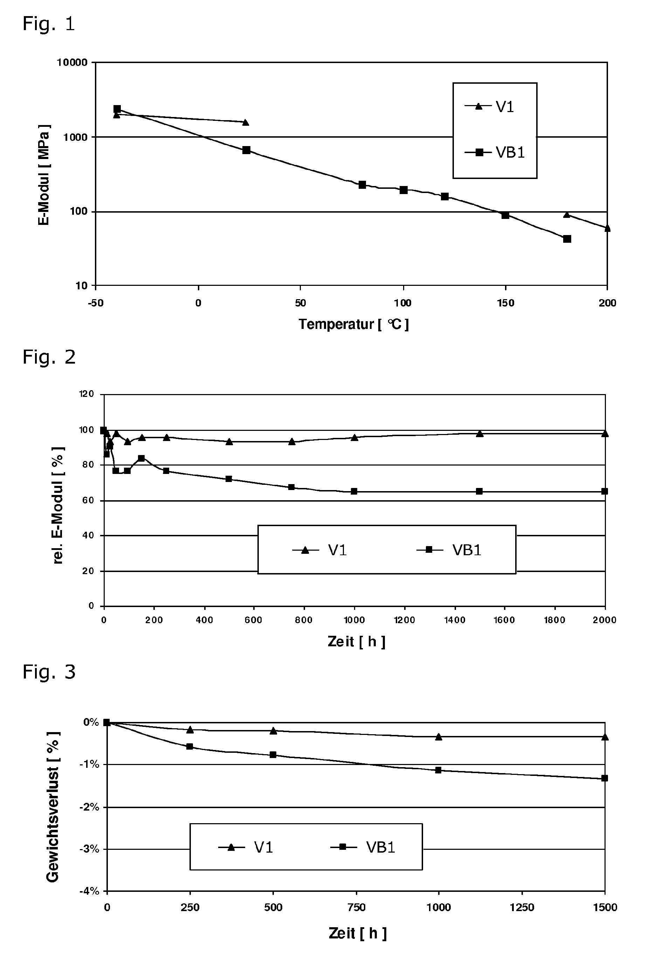

In der Figur 1 sind die E-Moduli in Abhängigkeit der Temperatur dargestellt. Das Vergleichsbeispiel 1 (**VB1**), welches bevorzugt für Anwendungen wie BKV-Leitungen eingesetzt wird, zeigt hier einen annähernd linearen Verlauf mit einem E-Modul bei -40 °C von ca. 2414 MPa, bei +23 °C von ca. 669 MPa, bei +100 °C von ca. 200 MPa, und bei +180 °C von ca. 43 MPa.

Der erfindungsgemässe Versuch **V1** zeigt einen E-Modul bei -40 °C von ca. 2000 MPa, bei +23 °C von ca. 1580 MPa, bei +180 °C von ca. 90 MPa und bei +200 °C von ca. 60 MPa. Für den erfindungsgemässen Versuch V1 werden bei tieferen Temperaturen tiefere Werte für den E-Modul als beim Vergleichsbeispiel VB1 beobachtet. Im Gegenteil dazu werden für den erfindungsgemässen Versuch V1 bei höheren Temperaturen höhere Werte für den E-Modul als beim Vergleichsbeispiel VB1 beobachtet.

In der Figur 2 ist der relative E-Modul in Abhängigkeit der Zeit dargestellt. Zur Stunde 0 liegt der relative E-Modul bei allen Versuchen bei 100%. Während der relative E-Modul beim Vergleichsbeispiel VB1 bereits nach 12 Stunden auf 86% fällt, beträgt der relative E-Modul bei dem erfindungsgemässen Beispiel V1 noch über 97%. Nach 48 Stunden fällt der relative E-Modul beim Vergleichsbeispiel VB1 auf ca. 80%, einen Wert, den das erfindungsgemässe Beispiel nie erreicht. Alle Experimente zeigen ab ca. 750 Stunden Werte auf etwa gleichbleibendem Niveau, wobei sich der relative E-Modul beim Vergleichsbeispiel VB1 einem Wert von ca. 65% annähert, während der relative E-Modul bei dem erfindungsgemässen Beispiel V1 nie unter 92% fällt und bei 2000 Stunden den Ausgangswert von 100% praktisch wieder erreicht.

In der Figur 3 ist der Gewichtsverlust dargestellt, wie dieser an mit erfindungsgemäss hergestellten Formmassen bzw. mit Vergleichsformmassen hergestellten Formkörpern bei +150 °C in Abhängigkeit der Zeit gemessen wurde. Zur Stunde 0 liegt der Gewichtsverlust bei allen Versuchen bei 0%. Während der Gewichtsverlust beim Vergleichsbeispiel VB1 bereits nach 250 Stunden 0.57% beträgt, so verliert das erfindungsgemässe Beispiel V1 in den ersten 250 Stunden nur 0.11%. Während der Gewichtsverlust bei dem Vergleichsbeispiel VB1 praktisch kontinuierlich zunimmt und nach 1500 Stunden 1.34% (VB1) beträgt, scheint sich das Gewicht beim erfindungsgemässen Beispiel V1 nach 1000 Stunden auf dem Niveau eines Gewichtsverlustes von etwa 0.33% bis 0.35% zu stabilisieren.

An Hand der Figuren 1 bis 3 konnte somit gezeigt werden, dass die erfindungsgemäss aus einer Polyamid-Blend-Formmasse mit einem Polyamid-Blend-Anteil und einer Schlagzähkomponente hergestellten, alternativen Unterdruck-Bremskraftverstärker-Leitungen zumindest vergleichbare, sehr oft sogar bessere Kenn-Werte als die aus dem Stand der Technik bekannten Bremskraftverstärker-Leitungen aufweisen.

Ein ebenfalls gemäss den Richtlinien VW PV3936 durchgeführter "Blow-By Test" ergab, dass gemäss dem Stand der Technik ausgeführte Testkörper (VB1) Risse auf der Oberfläche zeigten, währenddem erfindungsgemäss aus einer Polyamid-Blend-Formmasse mit einem Polyamid-Blend-Anteil und einer Schlagzähkomponente hergestellte Testkörper (V1) keinerlei Risse der Oberfläche zeigten.

Bei der **Komponente A** des Polyamid-Blend-Anteils der Formmasse zum erfindungsgemässen Herstellen von alternativen Unterdruck-Bremskraftverstärker-Leitungen aus einer Polyamid-Blend-Formmasse mit einem Polyamid-Blend-Anteil und einer Schlagzähkomponente handelt es sich um Polyamide mit durchschnittlich mindestens 8 C-Atomen pro Monomereinheit. Diese Polyamide sind aufgebaut auf Basis linearer und/oder verzweigter aliphatischer und/oder cycloaliphatischer und/oder aromatischer Monomere, und sind ausgewählt aus der Gruppe PA 11, PA 610, PA 612, PA 1010, PA 106, PA 106/10T, PA 614 und PA 618, oder Mischungen derselben.

Wenn ein teilkristallines Polyamid der Komponente A Verwendung findet, so weist dieses teilkristalline Polyamid eine Schmelz-Enthalpie von > 40 J/g auf.

Wenn ein mikrokristallines Polyamid respektive Copolyamid der **Komponente B** Verwendung findet, so weist dieses mikrokristalline Polyamid und/oder Copolyamid eine Schmelz-Enthalpie im Bereich von 4 bis 40 J/g, bevorzugt im Bereich von 4 bis 25 J/g auf (gemessen mit Differential Scanning Calorimetry, DSC). Bevorzugtermassen handelt es sich bei einem solchen mikrokristallinen Polyamid/Copolyamid um ein Polyamid, welches, wenn ohne weitere Bestandteile verarbeitet, transparente Formteile ergibt.

Mikrokristalline Polyamide sind aus aliphatischen, cycloaliphatischen und/oder aromatischen Monomeren aufgebaut und umfassen sowohl Homopolyamide als auch Copolyamide. Mikrokristalline Polyamide sind nicht mehr völlig amorph, sie weisen aber auf Grund ihrer mikrokristallinen Struktur Kristallite auf, die kleiner als die Wellenlänge des Lichtes und somit nicht sichtbar sind. Mikrokristalline Polyamide sind deshalb für das Auge noch durchsichtig.

Besonders bevorzugt für Komponente B sind dabei transparente Homopolyamide wie PA MACM12 und PA PACM12 sowie die transparenten Copolyamide PA 12/MACMI und PA MACM12/PACM12 sowie Mischungen oder Blends derselben. Ganz speziell bevorzugt für Komponente B ist PA MACMI/MACMT/12, welches aus WO 2007/087896 A1 bekannt ist.

Vorzugsweise ist das Polyamid PA MACMI/MACMT/12 der Komponente B gebildet aus:
- 30 bis 45 Gewichtsteilen MACMI,
- 30 bis 45 Gewichtsteilen MACMT, und
- 10 bis 40 Gewichtsteilen LC12.

Gemäss einer bevorzugten Ausführungsform handelt es sich bei der Komponente B um ein amorphes und/oder mikrokristallines Polyamid und/oder Copolyamid auf Basis eines cycloaliphatischen Diamins und/oder eines Diamins mit aromatischem Kern (z.B. MXDA oder PXDA). Bevorzugt wird dabei, dass dieses Polyamid auf Basis von cycloaliphatischen Diaminen und aliphatischen Dicarbonsäuren mit 10 bis 18 Kohlenstoffatomen aufgebaut ist. Speziell bevorzugt wird dabei, dass es sich beim cycloaliphatischen Diamin um MACM und/oder PACM und/oder IPD (Isophorondiamin) mit oder ohne zusätzliche Substituenten handelt. Bei dieser Komponente B als Ganzes wird insbesondere ein Copolyamid des Typs MACM/PACM bevorzugt, das jeweils aliphatische Dicarbonsäuren mit 10 bis 18 Kohlenstoffatomen wie zum Beispiel MACM12/PACM12 aufweist. Ganz speziell bevorzugt ist dabei eine PACM-Konzentration von grösser als 55 mol-%, insbesondere grösser 70 mol-%. MACM steht für die ISO-Bezeichnung Bis-(4-amino-3-methyl-cyclohexyl)-methan, welches unter dem Handelsnamen 3,3'-Dimethyl-4,4'-diaminodicyclohexylmethan als Laromin^{®} C260-Typ (CAS Nr. 6864-37-5) kommerziell erhältlich ist. Die Ziffer nach dem Begriff MACM steht jeweils für eine aliphatische lineare Dicarbonsäure (C12 z.B. DDS, Dodecandisäure), mit welcher das Diamin MACM polymerisiert ist. PACM steht für die ISO-Bezeichnung Bis-(4-aminocyclohexyl)-methan, welches unter dem Handelsnamen 4,4'-Diaminodicyclohexylmethan als Dicykan-Typ (CAS Nr. 1761-71-3) kommerziell erhältlich ist.

Alternativ oder zusätzlich kann es sich, wie bereits erläutert, bei der Komponente B um ein amorphes Polyamid und/oder Copolyamid handeln, dann bevorzugtermassen mit einer Schmelz-Enthalpie von weniger als 4 J/g (gemessen mit Differential Scanning Calorimetry, DSC). Bevorzugtennassen verfügt die Komponente B über eine Glasübergangstemperatur, die oberhalb von +120 °C, bevorzugt oberhalb von +140 °C und insbesondere bevorzugt oberhalb von +150 °C liegt.

In einer weiteren, bevorzugten Ausführungsform ist die Komponente B ein amorphes Polyamid und/oder Copolyamid auf Basis von aliphatischen und/oder cycloaliphatischen Diaminen. Bevorzugt werden amorphe Polyamide des Typs MACMI/12 verwendet, wobei der Gehalt an Laurinlactam in diesem Fall bevorzugt kleiner als 35 mol-%, insbesondere kleiner als 20 mol-% ist. Dabei steht jeweils I für Isophthalsäure. Bei der Komponente B kann es sich also um ein Polyamid auf Basis von aromatischen Dicarbonsäuren mit 8 bis 18 Kohlenstoffatomen oder von aliphatischen Dicarbonsäuren mit 6 bis 36 C-Atomen oder eine Mischung solcher Homopolyamide und/oder Copolyamide handeln. Bevorzugt wird hingegen ein Polyamid auf Basis von Lactamen und/oder Aminocarbonsäuren, wobei es sich bei den aromatischen Dicarbonsäuren z.B. um TPS (Terephthalsäure) und/oder IPS (Isophthalsäure) handelt. Das (transparente) Homopolyamid und/oder Copolyamid kann vorteilhafterweise ein Polyamid sein, das ausgewählt ist aus der Gruppe, die umfasst: PA 6I/6T, PA TMDT, PA NDT/INDT, PA 6I/MACMI/MACMT, PA 6I/PACMT, PA 6I/6T/MACMI, PA MACMI/MACM36 und PA 6I; lactamhaltige Polyamide wie PA 12/PACMI, PA 12/MACMI, PA 12/MACMT, PA 6/6I und PA 6/IPDT sowie eine beliebige Mischung dieser Polyamide. Weitere mögliche Systeme sind: PA MACM12, PA MACM18 oder PA PACM12, PA MACM12/PACM12, PA MACM18/PACM18, PA 6I/PACMI/PACMT oder daraus gebildete Mischungen. Die Bezeichnung bzw. Abkürzung der Polyamide erfolgt gemäss ISO 1874-1 (vgl. oben bei der Beschreibung von einzelnen Monomeren). Dabei steht z.B. jeweils I für Isophthalsäure und T für Terephthalsäure, TMD für Trimethylhexamethylendiamin, IPD für Isophorondiamin.

Weiter ist es vorteilhaft und möglich, dass es sich beim Homopolyamid und/oder Copolyamid um ein Polyamid auf Basis wenigstens einer Dicarbonsäure und wenigstens eines Diamins mit einem aromatischen Kern handelt, bevorzugt auf Basis von MXD (meta-Xylylendiamin), wobei die Dicarbonsäure aromatisch und/oder aliphatisch sein kann, und wobei es sich z.B. bevorzugt um PA 6I/MXDI handelt.

Bei der **Komponente C** des Polyamid-Blend-Anteils der Formmasse zum erfindungsgemässen Herstellen von alternativen Bremskraftverstärker-Leitungen aus einer Polyamid-Blend-Formmasse mit einem Polyamid-Blend-Anteil und einer Schlagzähkomponente handelt es sich um Polyamide mit durchschnittlich maximal 6 C-Atomen pro Monomereinheit, wie z.B. PA 6, PA 46 und PA 66. Diese Polyamide sind teilkristallin.

Bevorzugt ist die Polyamid-Blend-Formmasse zum Herstellen der erfindungsgemässen Unterdruck-Bremskraftverstärker-Leitung dadurch gekennzeichnet, dass die **Komponente D** ein Ethylen-α-Olefin-Copolymer, insbesondere bevorzugt ein EPM- und/oder EPDM-Elastomer (Ethylen-Propylen-Kautschuk respektive Ethylen-Propylen-Dien-Kautschuk), ist. So kann es sich beispielsweise um ein Elastomer handeln, welches auf einem Ethylen-C₃₋₁₂-α-Olefin-Copolymer basiert, das 20 bis 96 Gew.-% Ethylen und bevorzugt 25 bis 85 Gew.-% Ethylen enthält. Speziell bevorzugt wird ein C₃₋₁₂-α-Olefin ausgewählt aus der Gruppe Propen, 1-Buten, 1-Penten, 1-Hexen, 1-Octen, 1-Decen und/oder 1-Dodecen, wobei es sich insbesondere bevorzugt bei der Komponente E um Ethylen-Propylen-Kautschuk und/oder LLDPE (Linear Low Density Polyethylene) und/oder VLDPE (Very Low Density Polyethylene) handelt.

Alternativ oder zusätzlich (beispielsweise in Mischung) kann es sich bei der Komponente D um ein Terpolymeres auf Basis von Ethylen-C₃₋₁₂-α-Olefin mit einem unkonjugierten Dien handeln, das bevorzugt 25 bis 85 Gew.-% Ethylen und bis maximal im Bereich von 10 Gew.-% eines unkonjugierten Diens enthält. Speziell bevorzugt ist, dass es sich bei dem C₃₋₁₂-α-Olefin um ein Olefin ausgewählt aus der Gruppe Propen, 1-Buten, 1-Penten, 1-Hexen, 1-Octen, 1-Decen und/oder 1-Dodecen handelt, und/oder dass das unkonjugierte Dien bevorzugt ausgewählt ist aus der Gruppe Bicyclo(2.2.1)heptadien, Hexadien-1.4, Dicyclopentadien und/oder insbesondere 5-Ethylidennorbornen.

In Frage für die Komponente D kommen zudem auch Ethylen-Acrylat-Copolymere, Beispiele für Ethylen-Acrylat-Copolymere sind: Ethylen-Methylacrylat-Glycidylmethacrylat Terpolymere, kommerziell erhältlich z.B. bei Arkema (FR) unter dem Handelsnamen Lotader GMA, oder Ethylene-Acrylat-Maleinsäureanhydrid Terpolymere, kommerziell erhältlich z.B. bei Arkema (FR) unter dem Handelsnamen Lotader MAH. Weitere mögliche Formen für die Komponente D sind aber auch Ethylen-Butylen-Copolymere, Nitril-Kautschuke (z.B. NBR, H-NBR), Siliconkautschuke, EVA und Microgele, die in der WO 2005/033185 A1 beschrieben sind, beziehungsweise Mischungen (Blends), welche derartige Systeme enthalten.

Bevorzugtermassen verfügt die Komponente D über Säureanhydridgruppen, die durch thermische oder radikalische Reaktion des Hauptkettenpolymers mit einem ungesättigten Dicarbonsäureanhydrid, einer ungesättigten Dicarbonsäure oder einem ungesättigten Dicarbonsäuremonoalkylester in einer Konzentration eingebracht werden, die für eine gute Anbindung an das Polyamid ausreicht. Dafür werden bevorzugt Reagenzien ausgewählt aus der folgenden Gruppe: Maleinsäure, Maleinsäureanhydrid, Maleinsäuremonobutylester, Fumarsäure, Aconitsäure und/oder Itaconsäureanhydrid. Vorzugsweise werden 0.1 bis 4.0 Gew.-% eines ungesättigten Anhydrids an die Schlagzähkomponente E aufgepfropft oder das ungesättigte Dicarbonsäureanhydrid oder dessen Vorstufe wird zusammen mit einem weiteren ungesättigten Monomeren aufgepfropft. Generell ist der Pfropfgrad bevorzugtermassen in einem Bereich von 0.1-1.0 %, speziell bevorzugt in einem Bereich von 0.3-0.7%.

Ebenfalls möglich als eine bevorzugte Komponente D ist eine Mischung aus einem Ethylen-Propylen-Copolymer und einem Ethylen-Butylen-Copolymer, dies mit einem Maleinsäureanhydrid-Pfropfgrad (MAH-Propfgrad) im Bereich von 0.3-0.7 %. Ein solches Produkt ist unter der Bezeichnung "Tafmer MC201" von der Firma Mitsui Chemicals (JP) erhältlich.

Die oben angegebenen möglichen Systeme für die Komponente D können auch in Mischungen verwendet werden.

**Handelsübliche Additive**, wie Stabilisatoren (z.B. UV- und Hitzestabilisatoren (anorganische und organische)), Weichmacher, Radikalfänger, Nukleationsmittel, Verarbeitungshilfsstoffe, Farbstoffe, Flammschutzmittel, Füllstoffe, Funktionsstoffe, Gleitmittel, Antistatikmittel (z.B. Russ), Verstärkungsmittel (z.B. Glasfasern, Kohlefasern, Glimmer, Glaskugeln) und/oder Pigmente oder Kombinationen oder Mischungen davon, werden der Polyamid-Blend-Formmasse je nach Erfordernis beigemischt. Bei den Glasfasern können solche mit rundem (kreisförmigem) Querschnitt und/oder solche mit flachem (nichtkreisförmigem) Querschnitt verwendet werden.

Eine speziell bevorzugte Unterdruck-Bremskraftverstärker-Leitung ist dadurch gekennzeichnet, dass der Polyamid-Blend-Anteil aus den folgenden Polyamiden besteht:
(A) 55 bis 65 Gew.-% PA 610; und
(C) 10 bis 20 Gew.-% PA 6.

Eine ebenfalls bevorzugte Unterdruck-Bremskraftverstärker-Leitung ist dadurch gekennzeichnet, dass der Polyamid-Blend-Anteil aus den folgenden Polyamiden besteht:
25 bis 50 Gew.-% des zumindest einen teilkristallinen Polyamids der Komponente (A);
5 bis 20 Gew.-% des zumindest einen amorphen und/oder mikrokristallinen Polyamids der Komponente (B); und
5 bis 20 Gew.-% des zumindest einen Polyamids der Komponente (C).

Aus der europäischen Patentanmeldung EP 1 416 010 A2 ist beispielsweise ein Verfahren zum Herstellen von Polyamid-Nanocomposites bekannt, gemäss welchem organisch modifizierte Schichtsilikate bis zu einer Endkonzentration dieser Schichtsilikate von maximal 10 Gew.-% (bevorzugt von 2.5 bis 6 Gew.-%) in der Schmelze des Polyamid-Nanocomposites eingestellt werden können. Als Mineral wurden exfolierte Schichtsilikate mit einer mittleren Partikelgrösse von maximal 100 nm verwendet. Zu den vorzugsweise verwendeten Phyllosilikaten (Schichtsilikaten) des Dreischichttyps (2:1) zählen Glimmer (z.B. Muskovit, Paragonit, Phologopit, Biotit, Lepidolith, Margarit), Smektite (Montmorillonit, Hectorit) und Vermiculit. Derartige organisch modifizierte Schichtsilikate können als Verstärkungsmittel in Spritzgussteilen, aber auch in extrudierten Rohren verwendet werden.

Eine bevorzugte Unterdruck-Bremskraftverstärker-Leitung ist demnach dadurch gekennzeichnet, dass dem Blend ein Füllstoff beigemischt ist, der ausgewählt ist aus einer Gruppe, die Fasern und organisch modifizierte Schichtsilikate umfasst, wobei die Fasern auch als Flach-Glasfasern ausgebildet sein können, wobei der Polyamid-Blend-Formmasse bis zu 20 Gew.-% an Flach-Glasfasern beigemischt sind, und wobei die organisch modifizierten Schichtsilikate ausgewählt sind aus einer Gruppe, die Glimmer, Smektite und Vermiculit umfasst, wobei der Polyamid-Blend-Formmasse bis zu 15 Gew.-% an organisch modifizierten Schichtsilikaten beigemischt sind.

Die bevorzugte Polyamid-Blend-Formmasse lässt sich mit den bekannten Techniken zu Glattrohren und Wellrohren verarbeiten, wie z.B. der klassischen Rohrextrusion, Wellrohrextrusion oder Extrusionsblasformen, einschichtig oder mehrschichtig. Erfindungsgemäss wird die Polyamid-Blend-Formmasse zum Herstellen von einschichtig extrudierten Rohren verwendet.

Extrudierten Unterdruck-Bremskraftverstärker-Rohren können alternativ oder zusätzlich zu runden oder flachen Glasfasern und/oder Schichtsilikaten weitere Füllstoffe, wie z.B. Glasperlen, Talk-, CaCO₃- oder Kaolin-Partikel beigemischt sein.

Folgende chemische Systeme wurden verwendet:
**Komponente A** = teilkristalline Polyamide mit durchschnittlich mindestens 8 C-Atomen pro Monomereinheit:

| | |
|---|---|
| PA 610: | Polyamid 610 mit ηᵣₑₗ = 1.9-2.25, EMS-CHEMIE AG, Schweiz |
| PA 612: | Polyamid 612 mit ηᵣₑₗ = 2.0-2.25, EMS-CHEMIE AG, Schweiz |

**Komponente B** = Amorphes und/oder mikrokristallines Polyamid:

| | |
|---|---|
| PA MACMI/MACMT/12: | amorphes Polyamid mit ηᵣₑₗ = 1.5-1.6 und mit einem Tg = +190 °C, EMS-CHEMIE AG, Schweiz |

**Komponente C** = Polyamide mit durchschnittlich maximal 6 C-Atomen pro Monomereinheit:

| | |
|---|---|
| PA 6: | Polyamid 6 mit ηᵣₑₗ = 3.35-3.5, EMS-CHEMIE AG, Schweiz |
| PA 66: | RADIPOL A45, Radici Chimica, Italien (Polyamid 66 mit ηᵣₑₗ = 2.7) |

Schlagzähkomponente:
**Komponente D** = Nichtpolyamid-Elastomer:

| | |
|---|---|
| Nichtpolyamid-Elastomer: | Tafmer MC201, Mitsui Chemicals, Japan (mit Maleinsäureanhydrid gepfropfte Mischung aus Ethylen-Propylen-Copolymer und Ethylen-Butylen-Copolymer). |

Die Herstellung sogenannter Compounds oder Polyamid-Blend-Formmassen erfolgte auf einem Doppelwellen-Extruder Leistritz Micro27 (d= 27 mm, L/D= 40, 10 Gehäuse). Alle Komponenten der bevorzugten Polyamid-Blend-Formmasse wurden in den Einzug (Zone 1) dosiert. Die Formmassen wurden bei einer Schneckendrehzahl von 150-200 UPM (Umdrehungen pro Minute) und Zylindertemperaturen im Bereich von +100 bis +300 °C mit einem Durchsatz von 12 kg/h hergestellt und granuliert. Vor der Weiterverarbeitung wurde das Granulat bei +80 °C für 24 h getrocknet.

Anschliessend wurden diese Mischungen auf einer Arburg Allrounder 320-210-750 (Hydronica) Spritzgussmaschine zu den benötigten Probekörpern verarbeitet, wobei die Zylindertemperaturen zwischen +220 bis +280 °C und die Formtemperatur zwischen +20 und +80 °C lagen. Die Schneckendrehzahl betrug 150 bis 400 UPM. Die Herstellung der Test-Rohre in der Dimension 9 x 1.5 mm - 12.5 x 2.1 mm erfolgte auf einer Nokia-Maillefer Rohrextrusionsanlage, bestehend aus mindestens einem Extruder, einem Rohrwerkzeug, einer Kalibriervorrichtung mit Vakuumtank, sowie einem Kühlbad und nachfolgend einer Abzugs- und Schneidevorrichtung.

Die eingesetzten Polyamidformmassen werden vor der Rohrherstellung für ca. 8 h bei +80 °C getrocknet. Das vorgetrocknete Material wird über einen Trichter in eine 3-Zonen Schnecke gefördert, bei Zylindertemperaturen von +220 bis +280 °C aufgeschmolzen (Massetemperatur: +240 bis +280 °C) und homogenisiert, und ausgetragen über ein sogenanntes Rohwerkzeug. Der noch plastische Vorformling wird mittels Abzugvorrichtung durch eine Kalibrierung (z.B. einer Hülsenkalibrierung) gezogen, wo der Vorformling im Vakuumtank (Totaldruck: 100 bis 900 mbar) in der Kalibrierung ausgeformt wird. Dabei wird das geformte Rohr je nach Abzugsgeschwindigkeit mehr oder weniger lange gekühlt (die Länge der Kühlstrecke beträgt vorzugsweise 5 bis 20 m). Nach der gewünschten Abkühlung bzw. Kühlstrecke (Kühlbad-Temperatur: +10 bis +20 °C) wird das Rohr gewickelt oder geschnitten. Die Abzugsgeschwindigkeit liegt zwischen 20-100 m/min. Die einzelnen Zusammensetzungen sind in den Tabellen 2 bis 4 sowie 5 und 6 zusammengestellt.

Die Messungen wurden nach folgenden Normen und an folgenden Prüfkörpern durchgeführt:

| | |
|---|---|
| Zug-E-Modul: | IS0 527 mit einer Zuggeschwindigkeit von 1 mm/min; ISO-Zugstab, Norm: ISO/CD 3167, Typ A1, 170 x 20/10 x 4 mm, Temperatur: -40 °C, +23 °C, +80 °C, +100 °C; +120 °C, +150 °C und +200 °C (vgl. Fig. 1). |
| Reissfestigkeit und Reissdehnung: | IS 527 mit einer Zuggeschwindigkeit von 50 mm/min; ISO-Zugstab, Norm: ISO/CD 3167, Typ Al, 170 x 20/10 x 4 mm, Temperatur +23 °C. |
| Schlagzähigkeit nach Charpy: | IS0 179/*eU; ISO-Prüfstab, Norm: ISO/CD 3167, Typ 91, 80 x 10 x 4 mm, Temperatur +23 °C; * 1 = nicht instrumentiert, * 2 = instrumentiert. |
| Kerbschlagzähigkeit nach Charpy: | IS0 179/*eU; ISO-Prüfstab, Norm: ISO/CD 3167, Typ 91, 80 x 10 x 4 mm, Temperatur +23 °C bzw. -30 °C; * 1 = nicht instrumentiert, * 2 = instrumentiert. |
| Glasumwandlungstemperatur (Tg): | ISO-Norm 11357-11-2; Granulat |
| Schmelztemperatur (Tₘ): | ISO-Norm 11357-11-2; Granulat |
| Schmelz-Enthalpie (ΔH): | ISO-Norm 11357-11-2; Granulat |
| Berstdruck an Rohren: | DIN 73378; +23 °C |

Die Differential Scanning Calorimetry (DSC) wurde mit einer Aufheizrate von 20 K/min durchgeführt.

Die relative Viskosität wurde nach DIN EN IS0 307, für PA 610, PA 612, amorphes PA, Polyamid-Elastomer und Compounds in 0.5 Gew.-%-iger m-Kresollösung (d.h. 0.5 g PA in 100 ml Lösung), bei einer Temperatur von +20 °C; für PA 6 in 1 Gew.-%-iger Schwefelsäurelösung (d.h. 1 g PA in 100 ml Lösung) gemessen. Die Schmelzvolumen-Rate MVR (Melt Volume Rate) wurde nach IS0 1133 bei +275 °C gemessen.

Die Unterdruckfestigkeit wird bestimmt indem ein Unterdruck von 940 mbar angelegt wird und dann die Temperatur langsam erhöht wird. Die Temperatur an der das Rohr kollabiert wird gemessen. Die Schubmodulkurven wurden an Prüfkörpern mit den Massen 40 x 10 x 1 mm an einem Physica MCR301 der Fa. Anton Paar mit einer Deformation von 1.5 % und einer Frequenz von 1 Hz und einer Heizrate von 4 K/min aufgenommen.

Wenn in den Tabellen nichts anderes vermerkt ist, wurden die Prüfkörper für den Zugversuch im trockenen Zustand verwendet. Dazu wurden die Prüfkörper nach dem Spritzguss mindestens 48 h bei Raumtemperatur in trockener Umgebung gelagert. Die Rohre wurden vor der Prüfung konditioniert. Dabei zeigt die Tabelle 2 Basis-Daten für die Formmassen der Vergleichsbeispiele VB1, VB2 und VB3.

**Tabelle 2**

| **Komponente** | **Bedingungen** | **Einheit** | **VB1** | **VB2** | **VB3** |
|---|---|---|---|---|---|
| VESTAMID EX9350 | | Gew.-% | 100 | | |
| PA 610 | | Gew.-% | | 93.4 | 73.4 |
| PA MACMI/MACMT/12 | | Gew.-% | | | 20 |
| Nichtpolyamid-Elastomer | | Gew.-% | | 5 | 5 |
| Masterbatch für Schwarzeinfärbung und H-Stabilisierung | | Gew.-% | | 1.6 | 1.6 |

| **Total** | | | **100** | **100** | **100** |
|---|---|---|---|---|---|
| H2O Gehalt | | Gew.-% | 0.01 | 0.01 | 0.01 |
| Schmelzpunkt | | °C | 198 | 220 | 220 |
| Shore Härte D | | | 66 | n.b. | n.b. |
| Zugmodul | 1 mm/min | MPa | 670 | 2340 | 2120 |
| Belastung bei 50% Dehnung | 50 mm/min | MPa | 29 | n.b. | n.b. |
| Schlag Charpy | -30 °C | kJ/m² | o.B. | o.B. | o.B. |
| Kerbschlag Charpy | 23 °C | kJ/m² | 23 | 9 | 10 |
| Kerbschlag Charpy | -30 °C | kJ/m² | 6 | 9 | 9 |

| | | | | | |
|---|---|---|---|---|---|
| Dabei bedeuten: o.B. = ohne Bruch; n.b. = nicht bestimmt | | | | | |

VB1 ist ein Polyamid 612 Elastomer mit einem Elastizitätsmodul von 670 MPa und einem Charpy-Kerbschlag von 23 kJ/m² gemessen bei +23 °C. Im Vergleich sind VB2 und VB3 deutlich steifer, der Elastizitätsmodul liegt bei 2340 MPa bzw. 2120 MPa und auch der Charpy-Kerbschlag bei +23 °C ist mit 9 bzw. 10 kJ/m² niedriger als bei VB1.

Die Tabelle 3 zeigt Basis-Daten für die Formmassen der erfindungsgemässen Versuche V1, V5 und V6.

**Tabelle 3**

| **Komponente** | | **Bedingungen** | **Einheit** | **V1** | **V5** | **V6** |
|---|---|---|---|---|---|---|
| A | PA 610 | | Gew.-% | 63.7 | 63.7 | 63.7 |
| B | PA MACMI/MACMT/12 | | Gew.-% | 0 | 0 | 0 |
| C | PA 6 | | Gew.-% | 12.75 | 15 | |
| C | PA 66 | | Gew.-% | | | 15 |
| D | Nichtpolyamid-Elastomer | | Gew.-% | 20.0 | 20.0 | 20.0 |
| | Masterbatch für Schwarzeinfärbung und H-Stabilisierung | | Gew.-% | 3.55 | 1.3 | 1.3 |
| **Total** | | | | **100.0** | **100.0** | **100.0** |
| H₂O Gehalt | | | Gew.-% | 0.040 | 0.017 | 0.065 |
| Schmelzpunkt | | | °C | 222 | 220 | 221 |
| Shore Härte D | | | | 72 | 69 | n.b. |
| Zugmodul | | 1 mm/min | MPa | 1610 | 1550 | 1860 |
| Spannung bei 50% Dehnung | | 50 mm/min | MPa | 40 | 38 | - |
| Schlag Charpy | | -30 °C | kJ/m² | o.B. | o.B. | o.B. |
| Kerbschlag Charpy | | +23 °C | kJ/m² | o.B. | 95 | 75 |
| Kerbschlag Charpy | | -30 °C | kJ/m² | 22 | 23 | 18 |

| | | | | | | |
|---|---|---|---|---|---|---|
| Dabei bedeuten: o.B. = ohne Bruch; n.b. = nicht bestimmt | | | | | | |

Mit den Daten für die Formmassen der erfindungsgemässen Versuche V1, V5 und V6 kann gezeigt werden, dass mit geeigneter Wahl der Blendzusammensetzung der Elastizitätsmodul zwischen 1550 MPa bis 1860 MPa eingestellt werden kann. Der bei einer Temperatur von -30 °C gemessene Elastizitätsmodul liegt vorzugsweise bei höchstens 2000 MPa. Eine erfindungsgemässe Unterdruck-Bremskraftverstärker-Leitung weist bei einer Temperatur von -40 °C einen Elastizitätsmodul von höchstens 2400 MPa, bevorzugt von höchstens 2000 MPa, und besonders bevorzugt von höchstens 1950 MPa auf.

Solche Unterdruck-Bremskraftverstärker-Leitungen weisen zudem bei einer Temperatur von +180 °C einen Elastizitätsmodul von mindestens 50 MPa, bevorzugt von mindestens 75 MPa, besonders bevorzugt von mindestens 85 MPa auf.

Im Vergleich zu VB2 und VB3 wird der Elastizitätsmodul deutlich reduziert. Auch werden durch die erfinderischen Blends der Charpy-Kerbschlag bei +23 °C ≥ 75 kJ/m² eingestellt, was höher ist als für die Vergleichsbeispiele VB1-VB3. Besonders hervorzuheben ist der im Vergleich zu VB1-VB3 deutlich erhöhte Kerbschlag bei einer Temperatur von -30 °C.

Es wird hier angemerkt, dass das in den Tabellen 2 und 3 erwähnte Polyamid PA MACMI/MACMT/12 unter dem Handelsnamen Grilamid TR 60 bei der EMS-CHEMIE AG (Business Unit EMS-GRIVORY Europe, Domat/Ems, Schweiz) erhältlich ist.

An den aus diesen Formmassen hergestellten Rohren respektive Prüfkörpern wurden weitere Messungen vorgenommen, die entsprechenden Resultate sind in den Tabellen 4 bis 7 zusammengestellt.

Die Tabelle 4 zeigt den bei verschiedenen Temperaturen an ISO-Zugstäben gemessenen E-Modul (vgl. auch Fig. 1).

**Tabelle 4**

| **Bedingungen** | **Einheit** | **VB1** | **V1** | **V5** | **V6** |
|---|---|---|---|---|---|
| -40 °C | MPa | 2415 | 2000 | 1780 | n.b. |
| 23 °C | MPa | 670 | 1580 | 1550 | 1860 |
| 80 °C | MPa | 260 | n.b. | n.b. | n.b. |
| 120 °C | MPa | 150 | n.b. | n.b. | n.b. |
| 180 °C | MPa | 40 | 90 | 80 | 210 |
| 200 °C | MPa | n.m. | 60 | 55 | n.b. |

| | | | | | |
|---|---|---|---|---|---|
| Dabei bedeuten: n.b. = nicht bestimmt; n.m. = nicht messbar, da VB1 einen Schmelzpunkt von +198 °C hat. | | | | | |

Besonders hervorzuheben ist der im Vergleich zu VB1 reduzierte Elastizitätsmodul bei -40 °C bei gleichem bis höherem Elastizitätsmodul bei +180 °C.

Die Tabelle 5 zeigt die Hitzealterung von ISO-Zugstäben durch eine Lagerung bei +150 °C und die sich daraus ergebende relative Dehnung beim Bruch dieser ISO-Zugstäbe.

**Tabelle 5**

| **Lagerzeit [h]** | **Einheit** | **VB1** | **V1** |
|---|---|---|---|
| 12 | % | 100 | 100 |
| 48 | % | 75.3 | 95 |
| 96 | % | 81.6 | 86 |
| 250 | % | 96.5 | 63 |
| 500 | % | 59.0 | 53 |
| 750 | % | 41.3 | 57 |
| 1000 | % | 30.4 | 57 |
| 1500 | % | 21.9 | 49 |
| 2000 | % | 19.8 | 41 |

Währenddem bei dem erfindungsgemässen Beispiel V1 die Bruchdehnung kontinuierlich abnimmt, so steigt diese beim Stand der Technik (VB1) bei 96 und 250 Stunden nochmals an, bevor sie dann sehr schnell abnimmt. Das speziell bevorzugte, erfindungsgemässe Beispiel V1 zeigt nach 2000 Lagerstunden bei +150 °C immer noch eine relative Dehnung beim Bruch von über 40% und damit einen Wert, der ca. das Doppelte des Vergleichsbeispiels VB1 beträgt.

Die Tabelle 6 zeigt die Hitzealterung von ISO-Prüfstäben durch eine Lagerung bei +150 °C und die sich daraus ergebende Schlagzähigkeit (Charpy Impact) dieser ISO-Zugstäbe.

**Tabelle 6**

| **Lagerzeit [h]** | **Einheit** | **VB1** | **V1** |
|---|---|---|---|
| 0 | 100 kJ/m² | o.B. | o.B. |
| 250 | 100 kJ/m² | o.B. | o.B. |
| 500 | 100 kJ/m² | o.B. | o.B. |
| 750 | 100 kJ/m² | o.B. | o.B. |
| 1000 | 100 kJ/m² | 90 | o.B. |
| 1500 | 100 kJ/m² | 80 | o.B. |

| | | | |
|---|---|---|---|
| Dabei bedeuten: o.B. = ohne Bruch | | | |

Bis zu einer Lagerzeit von 750 Stunden brechen die ISO-Prüfstäbe aller untersuchten Proben (VB1, V1) nicht. Währenddem die erfindungsgemäss hergestellten ISO-Prüfstäbe (V1) auch nach einer über tausendstündigen Lagerung bei einer Temperatur von +150 °C nicht brechen, halten die ISO-Prüfstäbe aus dem Stand der Technik (VB1) dieser Belastung nicht stand.

## Patentansprüche

1. Unterdruck-Bremskraftverstärker-Leitung, hergestellt aus einer Polyamid-Blend-Formmasse mit einem Polyamid-Blend-Anteil und einer Schlagzähkomponente,
**dadurch gekennzeichnet, dass** der Polyamid-Blend-Anteil der Polyamid-Blend-Formmasse folgende Polyamide umfasst:
(A) 25 bis 65 Gew.-% zumindest eines teilkristallinen Polyamids mit einer Schmelz-Enthalpie von > 40 J/g und mit durchschnittlich mindestens 8 C-Atomen pro Monomereinheit, ausgewählt aus einer Gruppe, welche aus den Polyamiden PA 11, PA 610, PA 612, PA 1010, PA 106, PA 106/10T, PA 614 und PA 618 besteht;
(B) 0 bis 25 Gew.-% zumindest eines amorphen und/oder mikrokristallinen Polyamids, wobei das mikrokristalline Polyamid eine Schmelz-Enthalpie im Bereich von 4 bis 40 J/g aufweist; und
(C) 1 bis 55 Gew.-% zumindest eines Polyamids mit durchschnittlich maximal 6 C-Atomen pro Monomereinheit;
**dass** die Schlagzähkomponente gebildet ist aus:
(D) 5 bis 35 Gew.-% eines Nichtpolyamid-Elastomers oder einer Mischung aus Nichtpolyamid-Elastomeren;
wobei sich alle Angaben in Gew.-% auf das Gesamtgewicht der Polyamid-Blend-Formmasse beziehen und sich, optional ergänzt durch ebenfalls zugegebene handelsübliche Additive, zu 100 Gew.-% ergeben;
**und dass** die Unterdruck-Bremskraftverstärker-Leitung als einschichtig extrudiertes Rohr ausgebildet ist und bei einer Temperatur von +180 °C einen Elastizitätsmodul von mindestens 50 MPa aufweist, gemessen als Zug-E-Modul gemäss ISO 527 mit einer Zuggeschwindigkeit von 1 mm/min an einem ISO-Zugstab entsprechend der Norm ISO/CD 3167 Typ A1 mit den Abmessungen 170 x 20/10 x 4 mm;
wobei sich die durchschnittliche Anzahl C-Atome pro Monomereinheit aus der Summe der Anzahl C-Atome in den verwendeten Monomeren geteilt durch die Anzahl der verwendeten Monomere berechnet.

2. Unterdruck-Bremskraftverstärker-Leitung nach Anspruch 1, **dadurch gekennzeichnet, dass** das mikrokristalline Polyamid der Komponente (B) eine Schmelz-Enthalpie im Bereich von 4 bis 25 J/g aufweist.

3. Unterdruck-Bremskraftverstärker-Leitung nach Anspruch 1 oder 2, **dadurch gekennzeichnet, dass** der Polyamid-Blend-Anteil aus den folgenden Polyamiden besteht:
25 bis 50 Gew.-% des zumindest einen teilkristallinen Polyamids der Komponente (A);
5 bis 20 Gew.-% des zumindest einen amorphen und/oder mikrokristallinen Polyamids der Komponente (B); und
5 bis 20 Gew.-% des zumindest einen Polyamids der Komponente (C).

4. Unterdruck-Bremskraftverstärker-Leitung nach einem der vorhergehenden Ansprüche, **dadurch gekennzeichnet, dass** das zumindest eine amorphe und/oder mikrokristalline Polyamid der Komponente (B) ausgewählt ist aus einer Gruppe, welche die Polyamide PA MACMI/MACMT/12, PA MACMI/12 und PA PACM12, PA 6I/6T, PA TMDT, PA NDT/INDT, PA 6I/MACMI/MACMT, PA 6I/6T/MACMI, PA MACM12/PACM12, PA MACMI/MACM36, PA 6I; PA 12/PACMI, PA 12/MACMI, PA 12/MACMT, PA 6I/PACMT, PA 6/6I und PA 6/IPDT; PA MACM12, PA MACM18, PA PACM12, PA MACM12/PACM12, PA MACM18/PACM18, PA 6I/PACMI/PACMT; PA 6I/MXDI; sowie eine beliebige Mischung dieser Polyamide umfasst.

5. Unterdruck-Bremskraftverstärker-Leitung nach Anspruch 4, **dadurch gekennzeichnet, dass** das Polyamid PA MACMI/MACMT/12 gebildet ist aus:
- 30 bis 45 Gewichtsteilen MACMI,
- 30 bis 45 Gewichtsteilen MACMT, und
- 10 bis 40 Gewichtsteilen LC12.

6. Unterdruck-Bremskraftverstärker-Leitung nach einem der vorhergehenden Ansprüche, **dadurch gekennzeichnet, dass** das zumindest eine Polyamid der Komponente (C) mit durchschnittlich maximal 6 C-Atomen pro Monomereinheit ausgewählt ist aus einer Gruppe, welche die Polyamide PA 6, PA 46 und PA 66 umfasst.

7. Unterdruck-Bremskraftverstärker-Leitung nach Anspruch 1, **dadurch gekennzeichnet, dass** der Polyamid-Blend-Anteil aus den folgenden Polyamiden besteht:
(A) 55 bis 65 Gew.-% PA 610; und
(C) 10 bis 20 Gew.-% PA 6.

8. Unterdruck-Bremskraftverstärker-Leitung nach einem der vorhergehenden Ansprüche, **dadurch gekennzeichnet, dass** zumindest eines der Nichtpolyamid-Elastomere der Komponente (D) ausgewählt ist aus einer Gruppe, die Ethylen-α-Olefin-Copolymere, Ethylen-C₃₋₁₂-α-Olefin-Copolymere, und Ethylen-C₃₋₁₂-α-Olefin mit einem unkonjugierten Dien, NBR (Acrylnitril-Butadien-Kautschuk) und Acrylat umfasst.

9. Unterdruck-Bremskraftverstärker-Leitung nach Anspruch 8, **dadurch gekennzeichnet, dass** das Ethylen-α-Olefin-Copolymer ein EP-Elastomer (Ethylen-Propylen-Kautschuk) und/oder EPDM-Elastomer (Ethylen-Propylen-DienKautschuk) ist, wobei das Olefin des Ethylen-C₃₋₁₂-α-Olefin-Copolymers ausgewählt aus der Gruppe Propen, 1-Buten, 1-Penten, 1-Hexen, 1-Octen, 1-Decen und/oder 1-Dodecen, und wobei das unkonjugierte Dien ausgewählt ist aus der Gruppe Bicyclo(2.2.1)heptadien, Hexadien-1.4, Dicyclopentadien und 5-Ethylidennorbornen.

10. Unterdruck-Bremskraftverstärker-Leitung nach einem der vorhergehenden Ansprüche, **dadurch gekennzeichnet, dass** dem Blend ein Füllstoff beigemischt ist, der ausgewählt ist aus einer Gruppe, die Fasern und organisch modifizierte Schichtsilikate umfasst, wobei die Fasern als Flach-Glasfasern ausgebildet sind, wobei der Polyamid-Blend-Formmasse bis zu 20 Gew.-% an Flach-Glasfasern beigemischt sind, und wobei die organisch modifizierten Schichtsilikate ausgewählt sind aus einer Gruppe, die Glimmer, Smektite und Vermiculit umfasst, wobei der Polyamid-Blend-Formmasse bis zu 15 Gew.-% an organisch modifizierten Schichtsilikaten beigemischt sind.

11. Unterdruck-Bremskraftverstärker-Leitung nach einem der vorhergehenden Ansprüche, **dadurch gekennzeichnet, dass** sie bei einer Temperatur von -30°C einen Elastizitätsmodul von höchstens 2000 MPa aufweist.

12. Unterdruck-Bremskraftverstärker-Leitung nach einem der Ansprüche 1 bis 10, **dadurch gekennzeichnet, dass** sie bei einer Temperatur von -40 °C einen Elastizitätsmodul von höchstens 2400 MPa, bevorzugt von höchstens 2000 MPa, und besonders bevorzugt von höchstens 1950 MPa aufweist.

13. Unterdruck-Bremskraftverstärker-Leitung nach einem der Ansprüche 1 bis 10, **dadurch gekennzeichnet, dass** sie bei einer Temperatur von +180 °C einen Elastizitätsmodul von mindestens 75 MPa, bevorzugt von mindestens 85 MPa aufweist.

## Claims

1. A vacuum brake booster pipe, produced from a polyamide blend moulding material with a polyamide blend component and an impact-resistant component, **characterized in that** the polyamide blend component of the polyamide blend moulding material comprises the following polyamides:
(A) 25 to 65% by weight of at least one semi-crystalline polyamide with a melting enthalpy of > 40 J/g and with an average of at least 8 C atoms per monomer unit, selected from a group which consists of the polyamides PA 11, PA 610, PA 612, PA 1010, PA 106, PA 106/10T, PA 614 and PA 618;
(B) 0 to 25% by weight of at least one amorphous and/or microcrystalline polyamide, wherein the microcrystalline polyamide has a melting enthalpy in the range of 4 to 40 J/g; and
(C) 1 to 55% by weight of at least one polyamide with an average of a maximum of 6 C atoms per monomer unit;
**that** the impact-resistant component is formed from:
(D) 5 to 35% by weight of a non-polyamide elastomer or a mixture of non-polyamide elastomers;
wherein all specifications in percent by weight relate to the entire weight of the polyamide blend moulding material and add up to 100% by weight, optionally supplemented by similarly added conventional additives;
and **that** the vacuum brake booster pipe is arranged as a single-layer extruded pipe and has a modulus of elasticity of at least 50 MPa at a temperature of +180°C, measured as a tensile elasticity modulus according to ISO 527 with a tensile speed of 1 mm/min on an ISO tension rod according to norm ISO/CD 3167 Type A1 with the dimensions 170 x 20/10 x 4 mm;
wherein the average number of C atoms per monomer unit is calculated from the sum total of the number of the C atoms in the used monomers, divided by the number of the used monomers.

2. A vacuum brake booster pipe according to claim 1, **characterized in that** the microcrystalline polyamide of the component (B) has a melting enthalpy in the range of 4 to 25 J/g.

3. A vacuum brake booster pipe according to claim 1 or 2, **characterized in that** the polyamide blend component consists of the following polyamides:
25 to 50% by weight of the at least one semi-crystalline polyamide of the component (A);
5 to 20% by weight of the at least one amorphous and/or microcrystalline polyamide of the component (B); and
5 to 20% by weight of the at least one polyamide of the component (C).

4. A vacuum brake booster pipe according to one of the preceding claims, **characterized in that** the at least one amorphous and/or microcrystalline polyamide of the component (B) is selected from a group which comprises the polyamides PA MACMI/MACMT/12, PA MACMI/12 and PA PACM12, PA 6I/6T, PA TMDT, PA NDT/INDT, PA 6I/MACMI/MACMT, PA 6I/6T/MACMI, PA MACM12/PACM12, PA MACMI/MACM36, PA 6I; PA 12/PACMI, PA 12/MACMI, PA 12/MACMT, PA 6I/PACMT, PA 6/6I, and PA 6/IPDT; PA MACM 12, PA MACM 18, PA PACM 12, PA MACM12/PACM12, PA MACM18/PACM18, PA 6I/PACMI/PACMT; PA 6I/MXDI; as well as an arbitrary mixture of these polyamides.

5. A vacuum brake booster pipe according to claim 4, **characterized in that** the polyamide PA MACMI/MACMT/12 is formed from:
- 30 to 45 parts by weight of MACMI,
- 30 to 45 parts by weight of MACMT, and
- 10 to 40 parts by weight of LC12.

6. A vacuum brake booster pipe according to one of the preceding claims, **characterized in that** the at least one polyamide of the component (C) having an average of at most 6 C atoms per monomer unit is selected from a group which comprises the polyamides PA 6, PA 46 and PA 66.

7. A vacuum brake booster pipe according to claim 1, **characterized in that** the polyamide blend component consists of the following polyamides:
(A) 55 to 65% by weight of PA 610; and
(C) 10 to 20% by weight of PA 6.

8. A vacuum brake booster pipe according to one of the preceding claims, **characterized in that** at least one of the non-polyamide elastomers of the component (D) is selected from a group which comprises ethylene-α-olefin copolymers, ethylene-C₃₋₁₂-α-olefin copolymers, and ethylene-C₃₋₁₂-α-olefin copolymers with an unconjugated diene, NBR (acrylonitrile-butadiene rubber) and acrylate.

9. A vacuum brake booster pipe according to claim 8, **characterized in that** the ethylene-α-olefin copolymer is an EP elastomer (ethylene-propylene rubber) and/or EPDM elastomer (ethylene-propylene-diene rubber), wherein the olefin of the ethylene-C₃₋₁₂-α-olefin copolymer is selected from the group of propene, 1-butene, 1-pentene, 1-hexene, 1-octene, 1-decene and/or 1-dodecene, and wherein the unconjugated diene is selected from the group of bicyclo(2.2.1)heptadiene, hexadiene-1.4, dicyclopentadiene and 5-ethylidene norbornene.

10. A vacuum brake booster pipe according to one of the preceding claims, **characterized in that** a filler is admixed with the blend, which is selected from a group comprising fibres and organically modified layered silicates, wherein the fibres are formed as flat glass fibres, wherein up to 20% by weight of flat glass fibres are admixed with the polyamide blend moulding material, and wherein the organically modified layered silicates are selected from a group which comprises mica, smectites and vermiculite, wherein the polyamide blend moulding material is admixed with up to 15% by weight of organically modified layered silicates.

11. A vacuum brake booster pipe according to one of the preceding claims, **characterized in that** it has a modulus of elasticity of at most 2000 MPa at a temperature of -30°C.

12. A vacuum brake booster pipe according to one of the claims 1 to 10, **characterized in that** it has a modulus of elasticity of at most 2400 MPa at a temperature of -40°C, preferably at most 2000 MPa, and more preferably at most 1950 MPa.

13. A vacuum brake booster pipe according to one of the claims 1 to 10, **characterized in that** it has a modulus of elasticity of at least 75 MPa at a temperature of +180°C, preferably at least 85 MPa.

## Revendications

1. Conduit de servofrein à dépression, fabriquée à partir d'une matière à mouler contenant un mélange de polyamide avec une part de mélange de polyamide et un composant résistant aux chocs,
**caractérisée en ce que** la part de mélange de polyamide de la matière à mouler comprend les polyamides suivants :
(A) de 25 à 65 % en poids au moins d'un polyamide partiellement cristallin avec une enthalpie de fusion > 40 J/g et avec en moyenne au moins 8 atomes C par unité monomère, choisi à partir d'un groupe composé des polyamides PA 11, PA 610, PA 612, PA 1010, PA 106, PA 106/10T PA 614 et PA 618 ;
(B) de 0 à 25 % en poids au moins d'un polyamide amorphe et/ou micro-cristallin, le polyamide micro-cristallin présentant une enthalpie de fusion comprise entre 4 et 40 J/g ; et
(C) de 1 à 55 % en poids au moins d'un polyamide avec en moyenne 6 atomes C au maximum par unité monomère ;
**en ce que** le composant résistant aux chocs est constitué de :
(D) de 5 à 35 % en poids d'un élastomère non polyamide ou d'un mélange d'élastomères non polyamides ;
toutes les données exprimées en pourcentage en poids se rapportant au poids total de la matière à mouler contenant un mélange de polyamide et donnant au total, éventuellement complétées avec des additifs courants, 100 % en poids ;
et **en ce que** le conduit de servofrein à dépression est réalisée sous la forme d'un tube extrudé à une seule couche et présente, à une température de +180 °C, un module d'élasticité d'au moins 50 MPa, mesuré en tant que module d'élasticité en traction conformément à la norme ISO 527 avec une vitesse de traction de 1 mm/min sur une barre de traction ISO correspondant à la norme ISO/CD 3167 Type A1 de dimensions 170 x 20/10 x 4 mm ;
le nombre moyen d'atomes C par unité monomère étant calculé à partir de la somme du nombre d'atomes C dans les monomères utilisés divisée par le nombre de monomères utilisés.

2. Conduit de servofrein à dépression selon la revendication 1, **caractérisée en ce que** le polyamide micro-cristallin du composant (B) présente une enthalpie de fusion comprise entre 4 et 25 J/g.

3. Conduit de servofrein à dépression selon la revendication 1 ou 2, **caractérisée en ce que** la part de mélange de polyamide est composée des polyamides suivants :
de 25 à 50 % en poids du au moins un polyamide partiellement cristallin du composant (A) ;
de 5 à 20 % en poids du au moins un polyamide amorphe et/ou micro-cristallin du composant (B) ; et
de 5 à 20 % en poids du au moins un polyamide du composant (C).

4. Conduit de servofrein à dépression selon l'une des revendications précédentes, **caractérisée en ce que** le au moins un polyamide amorphe et/ou micro-cristallin du composant (B) est choisi à partir d'un groupe qui comprend les polyamides PA MACMI/MACMT/12, PA MACMI/12 et PA PACM12, PA 6I/6T, PA TMDT, PA NDT/INDT, PA 6I/MACMI/MACMT, PA 6I/6T/MACMI, PA MACM12/PACM12, PA MACMI/MACM36, PA 6I ; PA 12/PACMI, PA 12/MACMI, PA 12/MACMT, PA 6I/PACMT, PA 6/6I et PA 6/IPDT ; PA MACM12, PA MACM18, PA PACM12, PA MACM12/PACM12, PA MACM18/PACM18, PA 6I/PACMI/PACMT ; PA 6I/MXDI ; ainsi qu'un mélange quelconque de ces polyamides.

5. Conduit de servofrein à dépression selon la revendication 4, **caractérisée en ce que** le polyamide PA MACMI/MACMT/12 est formé à partir de :
- 30 à 45 parties en poids de MACMI,
- 30 à 45 parties en poids de MACMT, et
- 10 à 40 parties en poids de LC12.

6. Conduit de servofrein à dépression selon l'une des revendications précédentes, **caractérisée en ce que** le au moins un polyamide du composant (C) avec en moyenne 6 atomes C au maximum par unité monomère est choisi à partir d'un groupe qui comprend les polyamides PA 6, PA 46 et PA 66.

7. Conduit de servofrein à dépression selon la revendication 1, **caractérisée en ce que** la part de mélange de polyamide est composée des polyamides suivants :
(A) de 55 à 65 % en poids de PA 610 ; et
(C) de 10 à 20 % en poids de PA 6.

8. Conduit de servofrein à dépression selon l'une des revendications précédentes, **caractérisée en ce que** au moins un des élastomères non polyamides du composant (D) est choisi à partir d'un groupe qui comprend le copolymère éthylène-α-oléfine, le copolymère éthylène-C₃₋₁₂-α-oléfine, et éthylène-C₃₋₁₂-α-Oléfine avec un diène non conjugué, du NBR (caoutchouc acrylonitrile butadiène) et de l'acrylate.

9. Conduit de servofrein à dépression selon la revendication 8, **caractérisée en ce que** le copolymère éthylène-α-oléfine est un élastomère EP (caoutchouc d'éthylène-propylène) et/ou un élastomère EPDM (caoutchouc d'éthylène-propylène-diène), l'oléfine du copolymère éthylène-C₃₋₁₂-α-Oléfine étant choisie à partir du groupe propène, 1-butène, 1-pentène, 1-hexène, 1-octène, 1-décène et/ou 1-dodécène, et le diène non conjugué étant choisi à partir du groupe bicyclo(2.2.1)heptadiène, hexadiène-1.4, dicyclopentadiène et 5-éthylidène norbornène .

10. Conduit de servofrein à dépression selon l'une des revendications précédentes, **caractérisée en ce qu'**il est ajouté au mélange un matériel de remplissage qui est choisie à partir d'un groupe qui comprend des fibres et des silicates en couches modifiés de manière organique, les fibres étant réalisées sous la forme de fibres de verre plates, la matière à mouler contenant un mélange de polyamide étant mélangée jusqu'à 20% en poids aux fibres de verre plates, et les silicates en couches modifiés de manière organique étant choisis à partir d'un groupe qui comprend du mica, de la smectite et de la vermiculite, la matière à mouler contenant un mélange de polyamide étant mélangée jusqu'à 15% en poids à des silicates en couches modifiés de manière organique.

11. Conduit de servofrein à dépression selon l'une des revendications précédentes, **caractérisée en ce qu'**elle présente à une température de -30°C un module d'élasticité de maximum 2000 MPa.

12. Conduit de servofrein à dépression selon l'une des revendications 1 à 10, **caractérisée en ce qu'**elle présente à une température de -40°C un module d'élasticité de maximum 2400 MPa, de préférence de maximum 2000 MPa et de façon particulièrement préférée de maximum 1950 MPa.

13. Conduit de servofrein à dépression selon l'une des revendications 1 à 10, **caractérisée en ce qu'**elle présente à une température de +180 °C un module d'élasticité d'au moins 75 MPa, de préférence d'au moins 85 MPa.
